# EUROPEAN PATENT APPLICATION

(11) **EP 4 790 428 A1**
(43) Date of publication of application: **12.08.2026**
(21) Application number: 24881711.6
(22) Date of filing: 24.10.2024
(51) Int. Cl.: G01P 21/02

(54) **METHOD AND APPARATUS FOR CORRECTING TARGET VEHICLE VELOCITY, AND DEVICE AND STORAGE MEDIUM**

(30) Priority: 25.10.2023 CN 202311400527
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: WANG, Jingtao, Ningbo, Zhejiang 315899 (CN)
(74) Representative: Michalski Hüttermann & Partner mbB
(86) International application number: PCT/CN2024/127188
(87) International publication number: WO 2025/087350

(57) **Abstract**

A method and apparatus for correcting a target vehicle velocity, and an electronic device and a computer-readable storage medium. According to an embodiment of the present invention, the method is applied to a vehicle which is equipped with a sensor to periodically obtain measured velocities, measurement orientation angles and measured angular velocities of a target vehicle, and comprises: on the basis of the length of a measurement period, the magnitude of a measured velocity of the target vehicle at the current measurement moment and the magnitude of a measured velocity thereof at a previous measurement moment, the measurement orientation angles, and the measured angular velocities, estimating a reference orientation angle at the current measurement moment; on the basis of the reference orientation angle and measured velocity at the current measurement moment, determining a corresponding first reference velocity of the target vehicle at the reference orientation angle; and on the basis of the first reference velocity, correcting the measured velocity at the current measurement moment. When the direction of a measured velocity at the current measurement moment is not accurate enough, a reference orientation angle at the current measurement moment can be determined by means of a measured value at a previous measurement moment, thereby correcting the measured velocity.

## Description

### CROSS REFERENCE OF RELATED APPLICATIONS

The present disclosure claims priority to a Chinese patent application filed with the China Patent Office on October 25, 2023, with application number 202311400527.9 and entitled "METHOD AND APPARATUS FOR CORRECTING TARGET VEHICLE SPEED, AND DEVICE AND STORAGE MEDIUM", the entire contents of which are incorporated herein by reference.

### TECHNICAL FIELD

The present disclosure relates to the field of vehicles, particularly to methods and apparatuses for correcting a target vehicle speed, and devices and storage media.

### BACKGROUND

In some application scenarios, a vehicle needs to obtain a speed of a target vehicle, such as a target vehicle traveling in an adjacent lane or a target vehicle in front of the vehicle in the same lane, and execute corresponding strategies based on the speed of the target vehicle. For example, in scenarios of intelligent navigation or adaptive cruise control, the speed magnitude and speed direction of the target vehicle detected by sensors can be used to determine whether the target vehicle is to switch from this lane to an adjacent lane (cut out) or from an adjacent lane to this lane (cut in), thereby determining the current intelligent driving strategy for the target vehicle.

However, if the sensors used to detect the speed of the target vehicle are affected by factors such as environmental conditions or vehicle vibrations, it may result in the measured speed of the target vehicle not matching the actual speed of the target vehicle, leading to an incorrect determination of a driving strategy.

In related arts, the speed of the target vehicle measured by sensors is not stable enough to accurately reflect the actual speed of the target vehicle.

### SUMMARY

To overcome the problems in related arts, the present disclosure provides methods and apparatuses for correcting a target vehicle speed, and devices and machine-readable storage media, which can solve the above-mentioned problems.

The following is a summary of the subject matters described in detail in the present disclosure. This summary is not intended to limit the protection scope of the claims.

According to the first aspect of the embodiments of the present disclosure, a method for correcting the speed of a target vehicle is provided, performed by a vehicle, where sensors mounted on the vehicle are configured for periodic measurement to obtain a measured speed of the target vehicle, a measured orientation angle of the target vehicle, and a measured angular velocity of the target vehicle, where the method includes: estimating a reference orientation angle of the target vehicle at a current measurement time, based on a measurement period, a measured speed magnitude of the target vehicle at the current measurement time, a measured speed magnitude of the target vehicle at a previous measurement time, a measured orientation angle of the target vehicle at the previous measurement time, and a measured angular velocity of the target vehicle at the previous measurement time; determining a first reference speed of the target vehicle corresponding to the reference orientation angle, based on the reference orientation angle at the current measurement time and a measured speed at the current measurement time; and correcting the measured speed at the current measurement time based on the first reference speed.

According to the second aspect of the disclosed embodiment, an apparatus for correcting a speed of a target vehicle is provided, applied to a vehicle, where sensors mounted on the vehicle are configured for periodic measurement to obtain a measured speed of the target vehicle, a measured orientation angle of the target vehicle, and a measured angular velocity of the target vehicle, where the apparatus includes: an estimating unit, configured to a reference orientation angle of the target vehicle at a current measurement time, based on a measurement period, a measured speed magnitude of the target vehicle at the current measurement time, a measured speed magnitude of the target vehicle at a previous measurement time, a measured orientation angle of the target vehicle at the previous measurement time, and a measured angular velocity of the target vehicle at the previous measurement time; a determining unit, configured to determine a first reference speed of the target vehicle corresponding to the reference orientation angle, based on the reference orientation angle at the current measurement time and a measured speed at the current measurement time; and a correcting unit, configured to correct the measured speed at the current measurement time based on the first reference speed.

According to the third aspect of the embodiments of the present disclosure, an electronic device is provided, including: including one or more processors, and one or more memories; where the one or more memories are configured to store a computer program; the one or more processors are configured to execute, by calling the computer program, the method for correcting the speed of the target vehicle according to the first aspect.

According to the fourth aspect of the embodiments of the present disclosure, a computer-readable storage medium is provided, on which a computer program is stored. When the program is executed by a processor, the method for correcting the speed of the target vehicle as described in the first aspect is implemented.

The technical solutions provided by the embodiments of the present disclosure can include following beneficial effects.

The present disclosure utilizes sensors to perform periodically measurement, to obtain the measured speed, measured orientation angle, and angular velocity of the target vehicle. Since a magnitude of a speed measured by a sensor is relatively accurate, but a direction of the speed may include relatively large errors, a reference orientation angle at a current measurement time may be estimated based on the speed magnitude, an orientation angle at a previous measurement time, an angular velocity at a previous measurement time, a speed magnitude at a previous measurement time, and a measurement period. A reference speed is then determined based on the reference orientation angle and a measured speed at the current measurement time, to correct the measured speed at the current measurement time, thereby improving accuracy of the measured speed and reducing errors in the measured speed.

It is to be understood that the above general descriptions and the below detailed descriptions are merely exemplary and explanatory, and are not intended to limit the present disclosure. After reading and understanding the accompanying drawings and detailed description, other aspects can be understood.

### BRIEF DESCRIPTION OF DRAWINGS

Accompanying drawings herein are incorporated into and constitute a part of the specification, illustrate embodiments consistent with the present disclosure, and are combined with the description to explain the principle of the present disclosure.
FIG. 1 is a flowchart of a method for correcting a speed of a target vehicle according to an embodiment in the present disclosure.
FIG. 2 is a schematic diagram of a method for correcting a speed of a target vehicle according to an embodiment in the present disclosure.
FIG. 3 is a flowchart of a method for correcting a speed of a target vehicle according to an embodiment in the present disclosure.
FIG. 4 is a schematic diagram of a method for correcting a velocity of a target vehicle according to an embodiment in the present disclosure.
FIG. 5 is a schematic structural diagram of an electronic device where an apparatus for correcting a speed of a target vehicle is located, according to an embodiment of the present disclosure.
FIG. 6 is a block diagram of an apparatus for correcting a speed of a target vehicle according to an embodiment in the present disclosure.

### DETAILED DESCRIPTION

Embodiments will be described in detail herein, examples of which are illustrated in the accompanying drawings. When the following descriptions involve the drawings, like numerals in different drawings represent like or similar elements unless stated otherwise. Embodiments described in the illustrative examples below are not intended to represent all embodiments consistent with the present disclosure. Rather, they are merely embodiments of devices and methods consistent with some aspects of the present disclosure as recited in the appended claims.

Terms used in the present disclosure is only for the purpose of describing particular embodiments and is not intended to limit the present disclosure. As used in the present disclosure and the appended claims, the singular forms "a", "an" and "the" are intended to include the plural forms as well, unless the context clearly indicates otherwise. It should also be understood that the term "and/or" as used herein refers to and includes any and all possible combinations of one or more of the associated listed items.

It should be understood that although the terms first, second, third, etc. may be used in the present disclosure to describe various information, such information should not be limited to these terms. These terms are only used to distinguish the same type of information from each other. For example, without departing from the scope of the present disclosure, the first information may also be referred to as the second information, and similarly, the second information may also be referred to as the first information. Depending on the context, the word "if" as used herein can be interpreted as "at the time of", "when" or "in response to determining".

Vehicles can detect the speed and position of surrounding vehicles based on assembled sensors, and execute corresponding strategies according to the speed and position of surrounding vehicles.

For example, in the application scenario of assisted driving, the vehicle can have various forms of assisted driving functions, including but not limited to intelligent navigation, or adaptive cruise control, etc. The vehicle can execute corresponding driving strategies, such as acceleration, deceleration, or overtaking, based on the detected acceleration and deceleration of the vehicle ahead. For example, when the target vehicle in the adjacent lane is to merge into the current lane (cut in), the vehicle decelerates; when the target vehicle in this lane needs to switch to an adjacent lane (cut out), the vehicle accelerates.

However, the above driving strategies all rely on accurate determination of the speed of the target vehicle. However, in related arts, the determination of the speed of the target vehicle is based on vehicle-mounted sensors, such as multi-sensor fusion positioning using cameras, millimeter wave radar, and LiDAR. Therefore, the accuracy of the speed, positioning, or other information of the target vehicle measured by sensors will directly affect the execution of the above driving strategies. However, sensors may be affected by factors such as the environment conditions or vehicle vibrations, resulting in the loss of detected data in some regions, leading to abnormal speed of the target vehicle measured by the sensor. The measured speed of the target vehicle may not be accurate enough, for example, there may be deviations in the direction of the measured speed of the target vehicle. The inaccurate measurement of the speed of the target vehicle may lead to the execution of incorrect strategies for the target vehicle, resulting in danger.

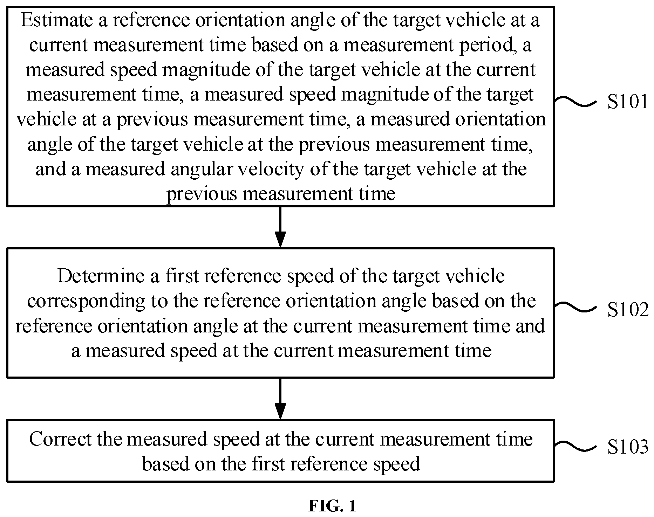

To address the aforementioned problems, the present disclosure proposes a method for correcting the speed of a target vehicle. FIG. 1 is a schematic flowchart of a method for correcting the speed of a target vehicle according to an embodiment in the present disclosure. The method is applied to a vehicle equipped with sensors for periodic measurement to obtain the measured speed, measured orientation angle, and measured angular velocity of the target vehicle. The method includes steps S101 to 103.

In step S101, a reference orientation angle of the target vehicle at a current measurement time is estimated, based on a measurement period, a measured speed magnitude of the target vehicle at the current measurement time, a measured speed magnitude of the target vehicle at a previous measurement time, a measured orientation angle of the target vehicle at the previous measurement time, and a measured angular velocity of the target vehicle at the previous measurement time.

In step 102, a first reference speed of the target vehicle corresponding to the reference orientation angle is determined, based on the reference orientation angle at the current measurement time and a measured speed at the current measurement time.

In step 103, the measured speed at the current measurement time is corrected based on the first reference speed.

In an embodiment, the target vehicle includes a target vehicle located around the vehicle or a target vehicle located in front of the vehicle.

In an embodiment, the sensor(s) mounted on the vehicle include the sensor(s) for measuring the speed of the target vehicle and the sensor(s) for measuring the orientation angle of the target vehicle.

For example, data can be collected through multiple sensors such as vehicle-mounted camera(s), millimeter wave radar(s), and LiDAR(s), and the data collected by multiple sensors can be combined to determine the speed of the target vehicle and/or angular velocity of the target vehicle.

In an embodiment, the measured orientation angle includes the angle between the orientation of the target vehicle and the front-rear direction of the vehicle.

In an embodiment, the sensor used to measure the orientation angle of the target vehicle can also be used to measure the angular velocity of the target vehicle.

In an embodiment, the measured angular velocity can be determined based on the measurement period and the difference between the measured orientation angles of two adjacent measurement periods. When the measurement period is small, it can be assumed that the angular velocity of an orientation of the target vehicle between adjacent measurement periods is constant. Therefore, the measured orientation angle at the current measurement time and the measured orientation angle at the previous measurement time can be determined first, and then the difference between the two can be divided by the measurement period to determine the measured angular velocity. The formula is as follows: ${\dot{φ}}_{n} = \frac{{φ}_{n} - {φ}_{n - 1}}{t}$

Where φ̇ₙ represents the angular velocity at the current measurement time, φₙ represents the measured orientation angle at the current measurement time, φₙ₋₁ represents the measured orientation angle at the previous measurement time, and t represents the measurement period.

Therefore, to determine the measured angular velocity at the previous measurement time, the measured orientation angle at the previous measurement time and the measured orientation angle at a measurement time preceding the previous measurement time are used.

In an embodiment, the measurement period of the sensor may be less than 0.1 seconds. For example, the measurement period can be 0.04 seconds, which means measuring 25 frames per second. In fact, a measurement period of less than 0.1 seconds is only an example of the present disclosure, and the present disclosure does not limit the specific value of the measurement period. It should be noted that the smaller the measurement period, the higher the accuracy of the method of the present disclosure. However, on the other hand, frequent collection, storage, and processing of data from the target vehicle can also impose a certain burden on the vehicle.

In an embodiment, the measurement period of the sensor can also be determined by the timestamps of the two recorded measurement times. The sensors on the vehicle can collect relevant data of the target vehicle with a changing period. When the following distance is far, a larger measurement period is used, and when the following distance is close, a smaller measurement period is used. Furthermore, to accurately determine the time interval between the data measured at the current time and the data measured at the previous measurement time, the time interval between the data measured at the current time and the data measured at the previous measurement time can be determined by the timestamps recorded at the two measurement times.

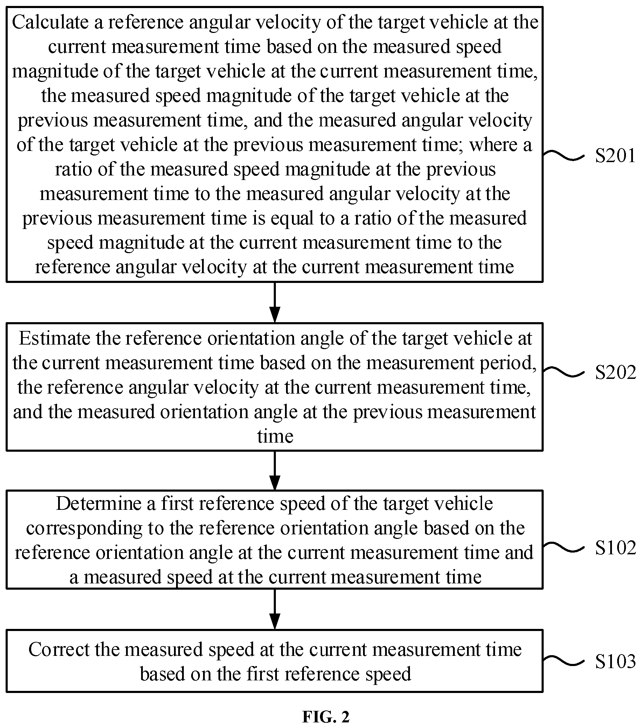

FIG. 2 is a schematic flowchart of a method for correcting the speed of the target vehicle according to an embodiment in the present disclosure. As shown in FIG. 2, estimating the reference orientation angle of the target vehicle at the current measurement time includes steps S201 and S202.

In step S201, a reference angular velocity of the target vehicle at the current measurement time is calculated, based on the measured speed magnitude of the target vehicle at the current measurement time, the measured speed magnitude of the target vehicle at the previous measurement time, and the measured angular velocity of the target vehicle at the previous measurement time; where a ratio of the measured speed magnitude at the previous measurement time to the measured angular velocity at the previous measurement time is equal to a ratio of the measured speed magnitude at the current measurement time to the reference angular velocity at the current measurement time.

In step S202, the reference orientation angle of the target vehicle at the current measurement time is estimated based on the measurement period, the reference angular velocity at the current measurement time, and the measured orientation angle at the previous measurement time.

Since a sensor used to measure an orientation angle of a target vehicle at the current time may be affected by environmental factors and thus exhibit a relatively large deviation from an actual value, a measured orientation angle obtained by the sensor at the current measurement time is not directly used. Instead, a reference orientation angle at the current measurement time is calculated based on a more accurate measured value at the previous measurement time.

In an embodiment, in the case where the measurement period is less than the first period, it can be assumed that the ratio of the speed magnitude to the angular velocity of the target vehicle at the same time is constant. Where the first period can be a preset smaller period. When the measurement period is smaller than this smaller period, the ratio of the speed magnitude of the target vehicle to angular velocity at the same time is constant, that is, the ratio of the measured speed magnitude at the previous measurement time to the measured angular velocity at the previous measurement time is equal to the ratio of the measured speed magnitude at the current measurement time to the reference angular velocity at the current measurement time.

As the measurement period becomes smaller, variations in driving operations performed by a driver of the target vehicle between a previous measurement time and a current measurement time become smaller, which can make the ratio of speed magnitude to angular velocity at the same time closer to constant, and the accuracy of the method of the present disclosure is also higher. Therefore, in the case where the measurement period is less than the first period, such as less than 0.1 seconds, it can be considered that using the method of the present disclosure can achieve good technical effects. The present disclosure does not limit the value of the first period, and the specific value of the first period can be adjusted based on the results of experimental testing or vehicle properties.

Due to the constraint imposed by a wheelbase of a vehicle body, a curvature radius of most vehicle movements during actual operation varies only slightly over a short time interval and is unlikely to undergo abrupt changes under the wheelbase constraint. Therefore, if a sensor incorrectly measures a speed of a target vehicle, that is, if a measured speed does not satisfy the above constraint, the measured speed may be inaccurate. In such a case, the erroneous measured speed may be corrected based on a constraint relationship between a curvature radius and a vehicle wheelbase.

However, it is difficult for vehicles to directly obtain the parameters used to construct the aforementioned constraint relationship through sensors. But under high-frequency measurements, it may be assumed that a front-wheel steering angle of the target vehicle remains unchanged between two consecutive frames. Accordingly, a constraint relationship at a current measurement time may be considered to be the same as a constraint relationship at a previous measurement time. Such a constraint relationship corresponds to a ratio between a speed magnitude and an angular velocity being constant at the same time, which indicates that a speed magnitude is correlated with a change in the speed direction.

In an actual vehicle moving process, a change in a vehicle orientation may slightly lag behind a change in a speed direction. However, since a lag time is relatively short, it may be approximately assumed that the speed direction of the vehicle is the same as the orientation direction of the vehicle.

In this case, the measured speed magnitude at the current measurement time is related to the angular velocity as follows: $\frac{{\dot{φ}}_{n}}{{v}_{n}} = \frac{{\dot{φ}}_{n - 1}}{{v}_{n - 1}}$

Where φ̇ₙ represents the angular velocity at the current measurement time, φ̇ₙ₋₁ represents the angular velocity at the previous measurement time, vₙ represents the speed magnitude at the current measurement time, and vₙ₋₁ represents the speed magnitude at the previous measurement time.

In an embodiment, the reference angular velocity of the target vehicle at the current measurement time is calculated based on the measured speed magnitude of the target vehicle at the current measurement time, and the measured speed magnitude and angular velocity at the previous measurement time.

Due to environmental factors such as vehicle vibrations, there may be significant errors in the speed direction of the target vehicle determined by sensors. Compared to detecting the speed of the target vehicle, the sensors on the vehicle measure the angular velocity more accurately based on the orientation of the target vehicle, and are basically not affected by environmental factors such as vehicle vibrations.

Therefore, in an embodiment, a reference angular velocity of the target vehicle at the current measurement time is calculated, based on the measured speed magnitude of the target vehicle at the current measurement time, the measured speed magnitude of the target vehicle at the previous measurement time, and the measured angular velocity of the target vehicle at the previous measurement time; where a ratio of the measured speed magnitude at the previous measurement time to the measured angular velocity at the previous measurement time is equal to a ratio of the measured speed magnitude at the current measurement time to the reference angular velocity at the current measurement time.

Where based on the measured speed of the target vehicle at the current measurement time and the measured speed and angular velocity at the previous measurement time, a more accurate reference angular velocity at the current measurement time is determined, and then the reference orientation angle is determined. The calculation formula can be as follows: ${\dot{φ}}_{p} = \frac{{\dot{φ}}_{n - 1}}{{v}_{n - 1}} \times {v}_{n}$

Where φ̇ₚ represents the reference angular velocity at the current measurement time, and is calculated based on the more accurate angular velocity and speed magnitude at the previous measurement time, the speed magnitude at the current measurement time, and a constant ratio relationship.

It should be noted that at the current measurement time, calculation of the reference angular velocity involves only a magnitude of the measured speed, which is measured with relatively high accuracy by the sensor. Accordingly, the reference angular velocity is not affected by reduced measurement accuracy of the sensor in special scenarios.

In an embodiment, the reference orientation angle of the target vehicle at the current measurement time is estimated based on the measurement period, the reference angular velocity at the current measurement time, and the measured orientation angle at the previous measurement time; Specifically, it can be calculated using the following formula: ${φ}_{p} = {\dot{φ}}_{p} \times t + {φ}_{n - 1}$

Where φₚ represents the reference orientation angle at the current measurement time, φ̇ₚ represents the reference angular velocity at the current measurement time, t is the measurement period, and φₙ₋₁ is the measured orientation angle at the previous measurement time.

In a case where the measurement period is small, or the time interval between two measurements is close, it can be assumed that the ratio of the speed to the angular velocity of the target vehicle at the same measurement time is constant.

In an embodiment, a first reference speed of the target vehicle corresponding to the reference orientation angle is determined, based on the reference orientation angle at the current measurement time and a measured speed at the current measurement time.

There is a correlation between the orientation angle of the target vehicle and the speed direction, such that the corresponding first reference speed can be inferred by the reference orientation angle and the measured speed.

For example, the direction of the first reference speed can be related to the orientation angle of the target vehicle at the current measurement time, and the magnitude of the first reference speed can be equal to the measured speed magnitude.

In an embodiment, the measured speed at the current measurement time is corrected based on the first reference speed.

For example, correcting the measured speed at the current measurement time based on the first reference speed includes but is not limited to: determining the first reference speed as the corrected measured speed; or correcting the measured speed at the current measurement time based on the first reference speed, such that the magnitude and direction of the corrected measured speed are respectively between the magnitude and direction of the first reference speed and the magnitude and direction of the original measured speed; or determining the direction of the first reference speed as the direction of the corrected measured speed, and determining the magnitude of the original measured speed as the magnitude of the corrected measured speed.

By correcting the measured speed through the first reference speed, the corrected measured speed is closer to the actual speed of the target vehicle compared to the original measured speed.

In an embodiment, correcting the measured speed at the current measurement time based on the first reference speed includes: performing a weighted summation of the first reference speed and the measured speed at the current measurement time according to predefined weight information; and determining the result of the weighted summation as a corrected measured speed.

For example, a weighted summation is performed on an angle between a direction of the first reference speed and a front-rear direction of the vehicle, and an angle between a direction of the measured speed and the front-rear direction of the vehicle, to determine a direction of the corrected measured speed; and a weighted summation is performed on a magnitude of the first reference speed and a magnitude of the measured speed, to determine a magnitude of the corrected measured speed.

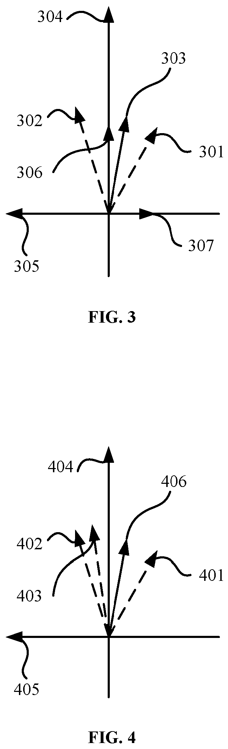

FIG. 3 is a schematic diagram of a method for correcting the speed of the target vehicle according to an embodiment in the present disclosure. As shown in FIG. 3, a coordinate system is constructed with the front-rear direction 304 of the vehicle and the left-right direction 305 of the vehicle. In the case where the target vehicle maintains straight driving, the measured speed 301 may deviate significantly from the actual driving direction of the target vehicle due to possible sensor malfunctions. In this case, the measured speed can be corrected by using the method in the present disclosure. By determining the current measured speed 301 and the first reference speed 302, and then performing weighted summation of the measured speed 301 and the first reference speed 302 to correct the measured speed 301, the corrected measured speed 303 is closer to the actual driving direction of the target vehicle compared to the measured speed 301 before correction.

The present disclosure calculates the reference angular velocity at the current measurement time by periodically and frequently measuring the speed, orientation angle, and angular velocity of the target vehicle, assuming that the ratio of the speed magnitude to the angular velocity at the same time is constant. Based on this reference angular velocity, the reference orientation angle is determined, and then the measured speed is corrected based on the reference orientation angle and the measured speed. When the speed direction measured by the sensor is abnormal due to factors such as vehicle vibrations at the current measurement time, the measured speed can be corrected to improve the accuracy of the measured speed, avoid the deviation of the measured speed direction, and avoid executing incorrect strategies due to large speed component errors in the left-right direction of the vehicle.

In an embodiment, the measured speed includes a lateral speed in the left-right direction of the vehicle, and/or a longitudinal speed in the front-rear direction of the vehicle.

As shown in FIG. 3, based on a measured speed 301 in a vehicle coordinate system, a longitudinal speed component 306 and a lateral speed component 307 can be determined. Since an actual traveling direction of the target vehicle is straight forward, measurement errors of the sensor are mainly caused by the lateral speed component 307. Accordingly, correction of the measured speed 301 is primarily directed to correction of the lateral speed component 307.

Where the left-right direction of the vehicle is the Y-axis of the vehicle coordinate system, and the front-rear direction of the vehicle is the X-axis of the vehicle coordinate system.

It should be noted that the measured speed and reference speed in the present disclosure can each include speed components along an X-axis and a Y-axis of a vehicle coordinate system. In some calculation scenarios, calculations performed on the speed may also be expressed as calculations performed on the speed components along the X-axis and the Y-axis.

In an embodiment, correcting the measured speed at the current measurement time based on the first reference speed includes: determining a speed component in the left-right direction and a speed component in the front-rear direction of the first reference speed; and correcting the lateral speed component and the longitudinal speed component of the measured speed at the current measurement time respectively based on the speed component in the left-right direction and the speed component in the front-rear direction of the first reference speed.

Correcting the measured speed separately in the lateral speed component and the longitudinal speed component can reduce a computational load associated with correcting the measured speed using the first reference speed, thereby improving a correction rate.

In an embodiment, determining the first reference speed of the target vehicle corresponding to the reference orientation angle, based on the reference orientation angle at the current measurement time and the measured speed at the current measurement time includes: performing a projection calculation on the measured speed at the current measurement time based on the reference orientation angle, to obtain the first reference speed.

Through a projection calculation, a direction of the measured speed is transformed into a direction defined by the reference orientation angle while the measured speed magnitude is kept unchanged.

For example, projected speed components of the first reference speed along an X-axis direction of the vehicle (i.e., a front-rear direction of the vehicle) and a Y-axis direction of the vehicle (i.e., a left-right direction of the vehicle) may be calculated based on the measured speed magnitude and the reference orientation angle, as follows: ${v}_{x , p} = cos {φ}_{p} {v}_{n}$ ${v}_{x , p} = sin {φ}_{p} {v}_{n}$

Where v_{x,p} and v_{y,p} respectively represent projected speed components of the first reference speed along the X-axis direction and the Y-axis direction. Therefore, the first reference speed may be determined based on the projected speed components of the first reference speed along the X-axis direction and the Y-axis direction.

In an embodiment, the magnitude of the first reference speed is the measured speed magnitude at the current measurement time, and the direction of the first reference speed is the reference orientation angle.

In fact, the foregoing descriptions merely provide several embodiments for estimating the first reference speed according to the present disclosure. Based on the reference angular velocity, the first reference speed is estimated, and in the case of possible errors in the measuring device, the current measured speed corrected based on the first reference speed is made closer to the actual speed of the target vehicle.

In an embodiment, the method further includes: performing a projection calculation on the measured speed at the current measurement time based on a measured orientation angle at the current measurement time to obtain a second reference speed of the target vehicle; and correcting the measured speed at the current measurement time based on the first reference speed includes: correcting the measured speed at the current measurement time based on the first reference speed and the second reference speed.

FIG. 4 is a schematic diagram of a method for correcting the speed of the target vehicle according to an embodiment in the present disclosure.

As shown in FIG. 4, a coordinate system is constructed with the front-rear direction 404 of the vehicle and the left-right direction 405 of the vehicle. In the case where the target vehicle maintains traveling straight forward, the measured speed 401 may deviate significantly from the actual driving direction of the target vehicle due to possible sensor malfunctions. In this case, the measured speed can be corrected using the method in the present disclosure. By determining the current measured speed 401, the first reference speed 402, and the second reference speed 403, the measured speed 401 at the current measurement time is corrected based on the first reference speed 402 and the second reference speed 403. The corrected measured speed 406 is closer to the actual driving direction of the target vehicle compared to the measured speed 401 before correction.

Since the first reference speed is determined based on the measured angular velocity determined at the previous measurement time, if there is an error in the measured angular velocity at the previous measurement time, it will also result in an error in the first reference speed. To avoid possible errors in the first reference speed affecting the measured speed at the current measurement time, a second reference speed can be added to correct the measured speed at the current measurement time through the first reference speed and second reference speed.

In an embodiment, the method further includes: performing a projection calculation on the measured speed at the current measurement time based on a measured orientation angle at the current measurement time to obtain a second reference speed of the target vehicle.

The measured orientation angle at the current measurement time can be used instead of the reference orientation angle, and together with the measured speed at the current measurement time, to determine a second reference speed, which will not be repeated in this embodiment.

In an embodiment, the measured speed at the current measurement time is corrected based on the second reference speed.

In general, the vehicle is equipped with multiple sensors, and the first sensor used to measure speed is different from the second sensor used to measure orientation angle.

Compared to the first sensor, the second sensor has higher stability and reliability. Therefore, the measured orientation angle at the current measurement time is more reliable than the measured speed direction. In this case, the second reference speed can also be determined, and the measured speed can be corrected based on the second reference speed.

In an embodiment, the measured speed at the current measurement time can be corrected based on the first reference speed and the second reference speed.

By correcting the measured speed at the current measurement time through the first reference speed and the second reference speed, the high reliability of both the first reference speed and second reference speed in different situations can be jointly utilized, thereby making the direction of the corrected measured speed closer to the actual speed direction of the target vehicle.

In an embodiment, correcting the measured speed at the current measurement time based on the first reference speed and the second reference speed includes: performing a weighted summation of the first reference speed, the second reference speed, and the measured speed at the current measurement time according to predefined weight information; and determining a result of the weighted summation as a corrected measured speed.

After determining the first reference speed, the second reference speed, and the measured speed at the current measurement time, it can be assumed that the actual speed of the target vehicle will be limited by these three speeds, and the actual speed direction of the target vehicle will not exceed the range represented by the directions of these three speeds. And different weights are designed based on the different characteristics of these three speeds.

For example, the formula can be: ${v}_{xcor} = {w}_{1} cos {φ}_{p} {v}_{n} + {w}_{2} cos {φ}_{2} {v}_{n} + {w}_{0} {v}_{x , n}$ ${v}_{ycor} = {w}_{1} sin {φ}_{p} {v}_{n} + {w}_{2} sin {φ}_{2} {v}_{n} + {w}_{0} {v}_{y , n}$

Where v_{xcor} and v_{ycor} respectively represent the speed components of the corrected measured speed along the X-axis and the Y-axis, v_{x,n} and v_{y,n} respectively represent speed components of the measured speed before correction along the X-axis and the Y-axis; w₁ represents the weight coefficient of the first reference speed, w₂ represents the weight coefficient of the second reference speed, w₀ represents the weight coefficient of the measured speed at the current measurement time, φₚ represents the reference orientation angle corresponding to the first reference speed, φ₂ represents the measured orientation at the current measurement time corresponding to the second reference speed, and vₙ represents the measured speed magnitude at the current measurement time.

In an embodiment, the sum of the weight coefficients indicated by the weight information is 1, that is: ${w}_{1} + {w}_{2} + {w}_{0} = 1$

For example, the above w₁, w₂, and w₀ can be 0.3, 0.3, and 0.4. It can be flexibly modified according to specific situations and needs. For example, if the measurement period of the sensor is short and the measurement frequency is high, the w₁ corresponding to the reference orientation angle can be appropriately increased; if the sensor's measurement of the orientation of the target vehicle is more stable, then the w₂ corresponding to the measured orientation angle can be appropriately increased; w₀ can also adjusted based on different vehicle models and sensors.

By using weighted summation for correction, the direction of the measured speed can be corrected to be closer to the actual speed of the target vehicle while ensuring that the magnitude of the corrected measured speed remains unchanged.

This embodiment can reduce the measured speed error of the target vehicle caused by sensor abnormalities and improve accuracy.

In an embodiment, correcting the measured speed at the current measurement time based on the first reference speed and the second reference speed includes: determining the corrected measured speed; where the sum of the differences between the corrected measured speed and the first reference speed, the second reference speed, and the measured speed at the current measurement time is minimized.

The corrected measured speed determined through this embodiment should be within the range of these three speed directions to make the corrected measured speed closer to the actual speed of the target vehicle.

In an embodiment, correcting the measured speed at the current measurement time based on the first reference speed and the second reference speed includes: performing a weighted summation of an angle of a direction of the first reference speed, an angle of a direction of the second reference speed, and an angle of a direction of the measured speed at the current measurement time. In other words, a weighted summation is performed on a reference orientation angle, a measured orientation angle, and an angle of a direction of the measured speed.

Where angles deviating from the X-axis direction of the vehicle in different directions may be distinguished by positive and negative signs.

In an embodiment, the method further includes: inputting a corrected measured speed into a driving assistance system, such that the driving assistance system determines a driving strategy for the target vehicle.

For example, the driving assistance system can be an intelligent navigation system or an adaptive cruise control system, and the driving assistance system can determine the driving strategy based on the speed magnitude and speed direction of the target vehicle. Providing the corrected measured speed to a driver assistance system can prevent errors in the measured speed caused by sensor abnormalities, avoid adversely affecting determination performed by the driver assistance system, and prevent execution of incorrect driving strategies.

In an embodiment, the measured speed of the target vehicle may be determined by the following method: determining the measured speed of the target vehicle based on a lateral measured speed and a longitudinal measured speed of the target vehicle obtained after filtering sensor measurements.

In an embodiment, the vehicle may store the state variables at the current measurement time, where the state variables include at least one of the following: the measured speed magnitude, the measured orientation angle, the timestamp at the time of measurement, and the measured angular velocity.

The stored state variables at the current measurement time are used to execute the method for correcting the speed of the target vehicle proposed in the present disclosure at the next measurement time.

In an embodiment, based on the set control module, users can choose whether to enable the method for correcting the speed of the target vehicle proposed in the present disclosure.

The method for correcting the speed of the target vehicle proposed in the present disclosure can correct the lateral speed error caused by abnormal sensor measurements to a normal range, and the calculation amount of the method for correcting the speed of the target vehicle in the present disclosure is relatively small and the delay is low.

Corresponding to the method of the present disclosure embodiments, the present disclosure further provides corresponding embodiments of apparatuses for correcting the speed of the target vehicle.

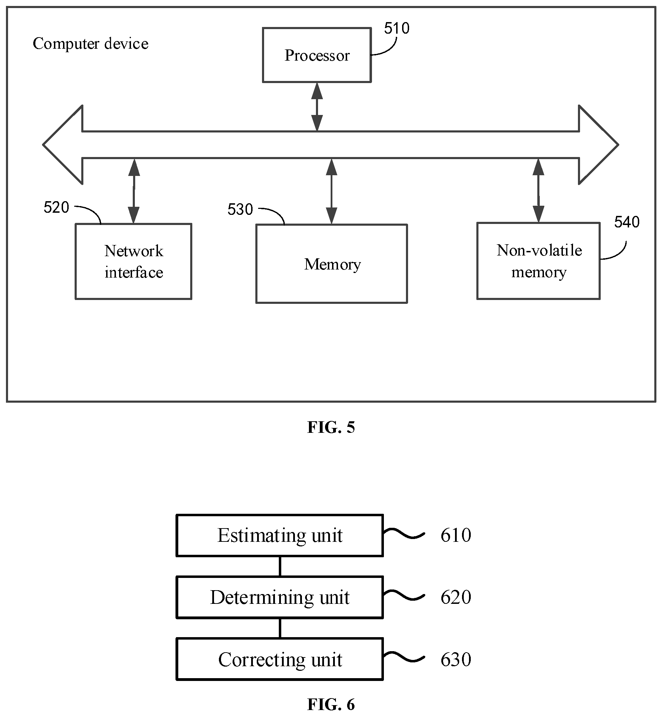

FIG. 5 is a schematic structural diagram of a device according to an embodiment. Referring to FIG. 3. At the hardware level, the device includes a processor 510, a network interface 520, a memory 530, and a non-volatile memory 540. Of course, it may also include hardware required for other services. One or more embodiments in the present disclosure can be implemented in a software manner, such as by the processor 510 reading the corresponding computer program from the non-volatile memory 540 into the memory 530 and then running it. Of course, in addition to the software implementation, one or more embodiments in the present disclosure does not exclude other implementation methods, such as logic devices or a combination of hardware and software, etc. That is, the executive of the following processing process is not limited to individual logic units, but can also be hardware or logic devices.

Referring to FIG. 6, which is a block diagram of an apparatus for correcting the speed of the target vehicle in an embodiment of the present disclosure. The apparatus for correcting the speed of the target vehicle can be applied to the electronic device shown in FIG. 5 to achieve the technical solution of the present disclosure. The apparatus for correcting a speed of a target vehicle is applied to a vehicle, where sensors mounted on the vehicle are configured for periodic measurement to obtain a measured speed of the target vehicle, a measured orientation angle of the target vehicle, and a measured angular velocity of the target vehicle, where the apparatus includes: an estimating unit 610, configured to a reference orientation angle of the target vehicle at a current measurement time, based on a measurement period, a measured speed magnitude of the target vehicle at the current measurement time, a measured speed magnitude of the target vehicle at a previous measurement time, a measured orientation angle of the target vehicle at the previous measurement time, and a measured angular velocity of the target vehicle at the previous measurement time; a determining unit 620, configured to determine a first reference speed of the target vehicle corresponding to the reference orientation angle, based on the reference orientation angle at the current measurement time and a measured speed at the current measurement time; and a correcting unit 630, configured to correct the measured speed at the current measurement time based on the first reference speed.

Optionally, estimating the reference orientation angle of the target vehicle at the current measurement time includes: calculating a reference angular velocity of the target vehicle at the current measurement time, based on the measured speed magnitude of the target vehicle at the current measurement time, the measured speed magnitude of the target vehicle at the previous measurement time, and the measured angular velocity of the target vehicle at the previous measurement time; where a ratio of the measured speed magnitude at the previous measurement time to the measured angular velocity at the previous measurement time is equal to a ratio of the measured speed magnitude at the current measurement time to the reference angular velocity at the current measurement time; and estimating the reference orientation angle of the target vehicle at the current measurement time based on the measurement period, the reference angular velocity at the current measurement time, and the measured orientation angle at the previous measurement time.

Optionally, determining the first reference speed of the target vehicle corresponding to the reference orientation angle, based on the reference orientation angle at the current measurement time and the measured speed at the current measurement time includes: performing a projection calculation on the measured speed at the current measurement time based on the reference orientation angle, to obtain the first reference speed.

Optionally, the apparatus is further configured to: perform a projection calculation on the measured speed at the current measurement time based on a measured orientation angle at the current measurement time to obtain a second reference speed of the target vehicle; and the correcting unit is configured to: correcting the measured speed at the current measurement time based on the first reference speed and the second reference speed.

Optionally, the correcting unit is configured to: perform a weighted summation of the first reference speed, the second reference speed, and the measured speed at the current measurement time according to predefined weight information; and determine a result of the weighted summation as a corrected measured speed.

Optionally, the measured speed at the current measurement time includes at least one of: a lateral speed component in a left-right direction of the vehicle; or a longitudinal speed component in a front-rear direction of the vehicle.

Optionally, the correcting unit is configured to: determine a speed component in the left-right direction and a speed component in the front-rear direction of the first reference speed; and correct the lateral speed component and the longitudinal speed component of the measured speed at the current measurement time respectively based on the speed component in the left-right direction and the speed component in the front-rear direction of the first reference speed.

Optionally, the apparatus is configured to: input a corrected measured speed into a driving assistance system, such that the driving assistance system determines a driving strategy for the target vehicle.

The implementation process of the functions and effects of each unit in the above apparatus is detailed in the implementation process of the corresponding steps in the above method.

Since the device embodiments basically corresponds to the method embodiments, the relevant parts can refer to the partial description of the method embodiments. The apparatus examples described above are merely illustrative, where the units described as separate components may or may not be physically separated, and the components displayed as units may or may not be physical units, i.e., may be located in one place or may be distributed to multiple network units. Some or all of the modules can be selected according to the actual needs to achieve the purpose of the technical solutions of the present disclosure. A person skilled in the art can understand and implement without creative work.

As will be understood by the skilled in the art, one or more embodiments of the present disclosure may be provided as a method, system or computer program product. Accordingly, one or more embodiments of the present disclosure may take the form of an entirely hardware embodiment, an entirely software embodiment, or an embodiment combining software and hardware aspects. Furthermore, one or more embodiments of the present disclosure may employ the form of a computer program product implemented on one or more computer-usable storage media (including, but not limited to, disk storage, CD-ROM, optical storage, etc.), where the one or more computer-usable storage media having computer-usable program code.

One or more embodiments of the present disclosure may be described in the general context of computer-executable instructions executed by a computer, such as a program module. Generally, a program module includes routines, programs, objects, components, data structures, and the like that perform a specific task or implement a specific abstract data type. One or more embodiments of the present disclosure may also be practiced in distributed computing environments where tasks are performed by remote processing devices that are connected via a communication network. In distributed computing environments, program modules may be located in local and remote computer storage medium, including storage devices.

The above description is only example(s) of one or more embodiments in the present disclosure and is not intended to limit one or more embodiments in the present disclosure. For those skilled in the art, one or more embodiments in the present disclosure may have various modifications and variations. Any modification, equivalent replacement, improvement, etc. present the spirit and principle of the present disclosure shall be included in the scope of the claims.

## Claims

1. A method for correcting a speed of a target vehicle, performed by a vehicle, wherein sensors mounted on the vehicle are configured for periodic measurement to obtain a measured speed of the target vehicle, a measured orientation angle of the target vehicle, and a measured angular velocity of the target vehicle, wherein the method comprises:
estimating a reference orientation angle of the target vehicle at a current measurement time, based on a measurement period, a measured speed magnitude of the target vehicle at the current measurement time, a measured speed magnitude of the target vehicle at a previous measurement time, a measured orientation angle of the target vehicle at the previous measurement time, and a measured angular velocity of the target vehicle at the previous measurement time;
determining a first reference speed of the target vehicle corresponding to the reference orientation angle, based on the reference orientation angle at the current measurement time and a measured speed at the current measurement time; and
correcting the measured speed at the current measurement time based on the first reference speed.

2. The method according to claim 1, wherein estimating the reference orientation angle of the target vehicle at the current measurement time comprises:
calculating a reference angular velocity of the target vehicle at the current measurement time, based on the measured speed magnitude of the target vehicle at the current measurement time, the measured speed magnitude of the target vehicle at the previous measurement time, and the measured angular velocity of the target vehicle at the previous measurement time; wherein a ratio of the measured speed magnitude at the previous measurement time to the measured angular velocity at the previous measurement time is equal to a ratio of the measured speed magnitude at the current measurement time to the reference angular velocity at the current measurement time; and
estimating the reference orientation angle of the target vehicle at the current measurement time based on the measurement period, the reference angular velocity at the current measurement time, and the measured orientation angle at the previous measurement time.

3. The method according to any one of claims 1-2, wherein determining the first reference speed of the target vehicle corresponding to the reference orientation angle, based on the reference orientation angle at the current measurement time and the measured speed at the current measurement time comprises:
performing a projection calculation on the measured speed at the current measurement time based on the reference orientation angle, to obtain the first reference speed.

4. The method according to any one of claims 1-3, wherein correcting the measured speed at the current measurement time based on the first reference speed comprises:
performing a weighted summation of the first reference speed and the measured speed at the current measurement time according to predefined weight information; and
determining a result of the weighted summation as a corrected measured speed.

5. The method according to any one of claims 1 to 3, further comprising:
performing a projection calculation on the measured speed at the current measurement time based on a measured orientation angle at the current measurement time to obtain a second reference speed of the target vehicle; and
correcting the measured speed at the current measurement time based on the first reference speed comprises: correcting the measured speed at the current measurement time based on the first reference speed and the second reference speed.

6. The method according to claim 5, wherein correcting the measured speed at the current measurement time based on the first reference speed and the second reference speed comprises:
performing a weighted summation of the first reference speed, the second reference speed, and the measured speed at the current measurement time according to predefined weight information; and
determining a result of the weighted summation as a corrected measured speed.

7. The method according to any one of claims 1-6, wherein the measured speed at the current measurement time comprises at least one of:
a lateral speed component in a left-right direction of the vehicle; or
a longitudinal speed component in a front-rear direction of the vehicle.

8. The method according to claim 7, wherein correcting the measured speed at the current measurement time based on the first reference speed comprises:
determining a speed component in the left-right direction and a speed component in the front-rear direction of the first reference speed; and
correcting the lateral speed component and the longitudinal speed component of the measured speed at the current measurement time respectively based on the speed component in the left-right direction and the speed component in the front-rear direction of the first reference speed.

9. The method according to any one of claims 1 to 8, further comprising:
inputting a corrected measured speed into a driving assistance system, such that the driving assistance system determines a driving strategy for the target vehicle based on the corrected measured speed.

10. An apparatus for correcting a speed of a target vehicle, applied to a vehicle, wherein sensors mounted on the vehicle are configured for periodic measurement to obtain a measured speed of the target vehicle, a measured orientation angle of the target vehicle, and a measured angular velocity of the target vehicle, wherein the apparatus comprises:
an estimating unit, configured to a reference orientation angle of the target vehicle at a current measurement time, based on a measurement period, a measured speed magnitude of the target vehicle at the current measurement time, a measured speed magnitude of the target vehicle at a previous measurement time, a measured orientation angle of the target vehicle at the previous measurement time, and a measured angular velocity of the target vehicle at the previous measurement time;
a determining unit, configured to determine a first reference speed of the target vehicle corresponding to the reference orientation angle, based on the reference orientation angle at the current measurement time and a measured speed at the current measurement time; and
a correcting unit, configured to correct the measured speed at the current measurement time based on the first reference speed.

11. An electronic device, comprising one or more processors, and one or more memories; wherein
the one or more memories are configured to store a computer program; and
the one or more processors are configured to execute, by calling the computer program, the method for correcting the speed of the target vehicle according to any one of claims 1-9.

12. A computer-readable storage medium storing a computer program, wherein when the computer program is executed by one or more processors, the method for correcting the speed of the target vehicle according to any one of claims 1-9 is implemented.
